# EUROPEAN PATENT APPLICATION

(11) **EP 2 363 941 A1**
(43) Date of publication of application: **07.09.2011**
(21) Application number: 10155330.3
(22) Date of filing: 03.03.2010
(51) Int. Cl.: H02K 3/50

(54) **Tightening device for end winding supports of an electric generator**

(71) Applicant: Alstom Technology Ltd, 5400 Baden (CH)
(72) Inventor: Arndt, Andre, CH-5242, Lupfig (CH); Stallone, Francesco, CH-6600, Locarno (CH)

(57) **Abstract**

The tightening device (7) for end winding supports of an electric generator comprises a rod (10) supporting a wedge (11), a plurality of springs (14) and a nut (13). It also comprises a spacer (15) provided between the wedge (11) and the nut (13), arranged to define the smallest axial distance between the wedge (11) and the nut (13). In addition, the opposite end of the rod (10) carries a fixed wedge (8)

## Description

### TECHNICAL FIELD

The present invention relates to a tightening device for end winding supports of an electric generator.

### BACKGROUND OF THE INVENTION

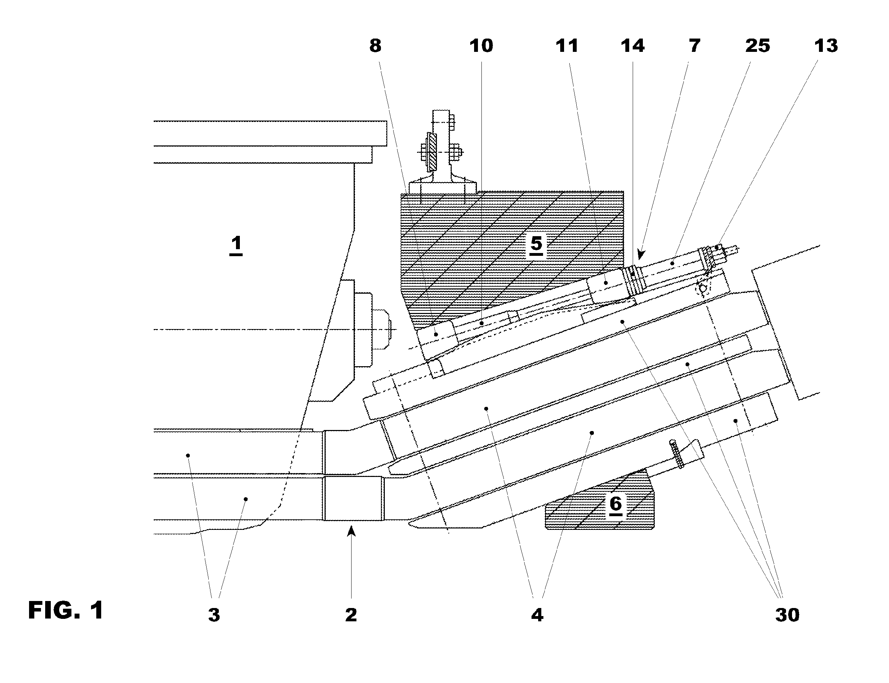

In the following reference to figure 1 is made.

Figure 1 shows a stator 1 having stator bars 2.

Each stator bar 2 has a straight part 3 contained in a slot of the stator 1, and an end winding part 4 outside of the slots and connected to an end winding part of another stator bar.

Typically, the end winding parts 4 the stator bars 2 are clamped together with clamping plates 30 and are supported by conical supports 5, 6 (usually having a ring shape) via tightening devices 7 that maintain the end winding parts 4 firmly connected to the supports 5, 6.

Traditionally the tightening devices 7 are provided with a rod 10 having at one side a fixed wedge 8 (this wedge 8 cannot move with respect to the rod 10) and at the other side a movable wedge 11 blocked by a nut 13, with one or often more than one spring 14 and a distance sleeve 25 inbetween.

During operation of the generator, the connected elements withstand setting effects that cause the wedge 11 to go forward pressed by the springs 14 (the nut 13 is usually fixed and cannot move); even if it is larger at the beginning of the generator lifetime, these setting effects continues over the whole generator lifetime.

For this reason, during periodical revisions the remaining load of the springs 14 of the tightening devices 7 must be checked and, when needed, the nuts 13 must be screwed to bring the springs 14 to the correct design pre-compression.

Nevertheless, checking the remaining load of the springs 14 and screwing of the nuts 13 to the correct position, to give the springs 14 the correct design pre-compression, is a very delicate operation that requires a very large amount of time.

In addition, since springs are typically made of glass fibres, an incorrect pre-compression (i.e. a too large pre-compression) could cause the springs to break.

### SUMMARY OF THE INVENTION

The technical aim of the present invention is therefore to provide a tightening device by which the said problems of the known art are eliminated.

Within the scope of this technical aim, an aspect of the invention is to provide a tightening device by which screwing of the nuts, such that the springs are brought to the correct design pre-compression, is very fast and precise.

A further aspect of the invention is to provide a tightening device in which the springs cannot break during maintenance because of an incorrect pre-compression.

The technical aim, together with these and further aspects, are attained according to the invention by providing a tightening device in accordance with the accompanying claims.

Advantageously, in preferred embodiments of the invention also measurement of the displacement due to the setting effects is very fast.

### BRIEF DESCRIPTION OF THE DRAWINGS

Further characteristics and advantages of the invention will be more apparent from the description of a preferred but non-exclusive embodiment of the tightening device, illustrated by way of non-limiting example in the accompanying drawings, in which:
Figure 1 is a schematic view of a traditional tightening device connected to end winding supports;
Figure 2 is a longitudinal section of a tightening device in embodiments of the invention in a tightened configuration;
Figure 3 is a longitudinal section of the tightening device in embodiments of the invention in a loosened configuration;
Figure 4 is a side view of a portion of the tightening device in embodiments of the invention in a tightened configuration (upper part of figure 4) and in a loosened configuration (lower part of figure 4); and
Figure 5 is a longitudinal section of a tightening device in a different embodiment of the invention.

### DETAILED DESCRIPTION OF EMBODIMENTS OF THE INVENTION

With reference to the figures, these show a tightening device 7 for end winding supports of an electric generator.

The tightening device 7 comprises a rod 10 supporting a movable connecting element such as a wedge 11 (in particular the rod 10 in inserted into a through hole of the wedge 11).

The rod 10 also supports springs 14, resting against the largest base of the wedge 11, and a blocking element, such as a nut 13 screwed on a threaded terminal portion of the rod 10.

In addition, a spacer 15 is provided between the wedge 11 and the nut 13, arranged to define the smallest axial distance (i.e. the distance along the rod 10) between the wedge 11 and the nut 13.

Typically between the spacer 15 and the nut 13 a distance sleeve 25 is provided (not shown), similar to the one shown in figure 1.

The spacer 15 comprises a housing wherein the springs 14 are housed; this housing comprises an outer element 17 encircling an inner element 18.

In particular, the outer and the inner element 17, 18 have coaxial cylindrical walls 17w, 18w.

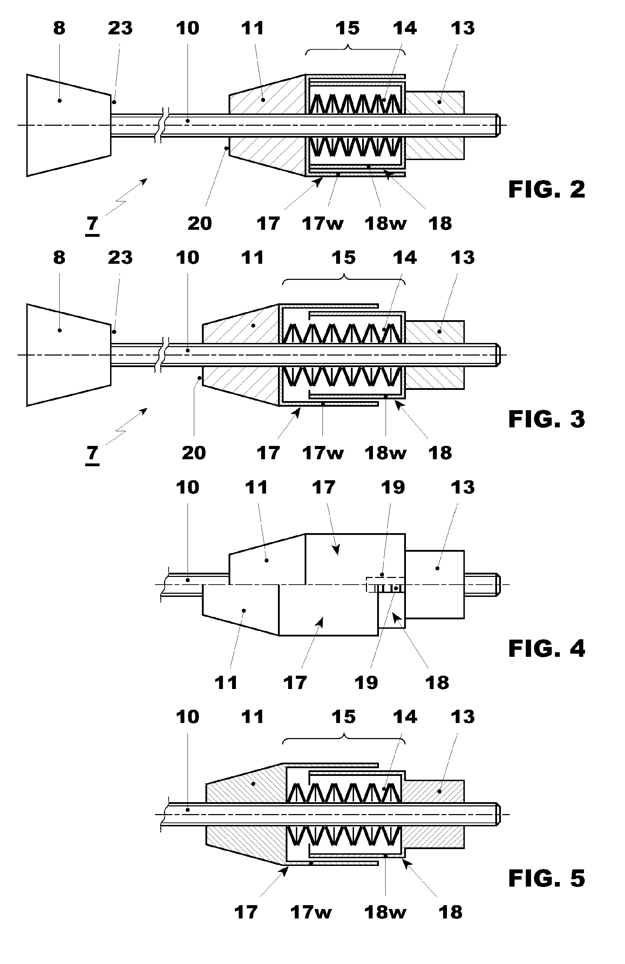

For example the outer element may be realised in one piece with the wedge 11 or nut 13 and/or the inner element 18 may be realised in one piece with the nut 13 and/or wedge 11; figure 5 shows an example in which the outer element 17 is realised in one piece with the wedge 11 and the inner element 18 is realised in one piece with the nut 13.

In further embodiments the outer element 17 and/or the inner element 18 are cup shaped pieces (figures 2 and 3 show the outer and inner element that are defined by cup shaped pieces).

The coaxial cylindrical walls 17w, 18w of the outer and inner elements 17, 18 are slidingly connected together, such that the element 15 may expand because of the setting effects and may be tightened during maintenance.

Advantageously, the cylindrical wall 18w of the inner element 18 is provided with a ruler 19; correspondingly, the outer element 17 has an indicator, indicating the displacement on the ruler 19; preferably the indicator is defined by an end border of the cylindrical wall 17w.

As shown, the wedge 11 has its smallest base 20 that is opposite the springs 14 and the nut 13 associated to it.

In addition, the rod 10 carries, at an end opposite the one having the arrangement comprising the wedge 11, the springs 14, the nut 13 and the spacer 15, a further fixed connecting element such as a further wedge 8 with its smallest base 23 towards the arrangement comprising wedge 11, springs 14, nut 13 and spacer 15.

This further wedge 8 is fixed to the rod 10 for example by glue.

The operation of the tightening device 7 is apparent from that described and illustrated and is substantially the following.

After assembling (or after maintenance) the tightening devices 7 are in the configuration of figure 2, i.e. the outer and the inner elements 18, 17 are tightened and the border of the wall 18w rests against the ceiling of the outer element 17.

Bringing the tightening device is this configuration is easy and fast, since the operators only have to screw the nut 13 until the spacer 15 is tightened; thus no force or distance measures are needed to check the pre-compression of the springs 14. In addition, since correct pre-compression is achieved when the spacer 15 is tightened, no risk of spring breakage exists.

During operation, because of the setting effects, the wedge 11 moves forwards (the nut 13 is fixed); thus the tightening device 7 turns its configuration into the one of figure 3.

When in this configuration, measuring the displacement (to ascertain whether maintenance operations are needed or not) is easy and fast, since the operators only have to look at the ruler 19 onto which the border of the wall 17w indicates the displacement. In case the relevant parts are not easily accessible, these operations may also be carried out using a mirror connected to the end of a bar.

Then, if maintenance is needed, the nut 13 can be screwed until the spacer 15 is tightened.

Naturally, even if the nut 13 is secured by gluing, during maintenance operation (to tighten the spacer 15) it is disconnected from the rod 10 to be then (after maintenance) connected again thereto.

Naturally the features described may be independently provided from one another.

The tightening device conceived in this manner is susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

- 1: stator
- 2: stator bar
- 3: straight part of 2
- 4: end winding part of 2
- 5, 6: supports
- 7: tightening device
- 8: fixed wedge
- 10: rod
- 11: wedge
- 13: nut
- 14: spring
- 15: spacer
- 17: outer element
- 17w: wall of 17
- 18: inner element
- 18w: wall of 18
- 19: ruler
- 20: smallest base of 11
- 23: smallest base of 8
- 25: distance sleeve
- 30: clamping plates

## Claims

1. Tightening device (7) for end winding supports of an electric generator comprising a rod (10) supporting at least a connecting element (11), at least a spring (14) and a blocking element (13), **characterised by** comprising a spacer (15) provided between the connecting element (11) and the blocking element (13), arranged to define the smallest axial distance between the connecting element (11) and the blocking element (13).

2. Tightening device (7) as claimed in claim 1, **characterised in that** the connecting element (11) is a wedge.

3. Tightening device (7) as claimed in claim 1, **characterised in that** the spacer (15) comprises a housing wherein the at least a spring (14) is at least partially housed.

4. Tightening device (7) as claimed in claim 3, **characterised in that** said housing comprises an outer element (17) encircling an inner element (18).

5. Tightening device (7) as claimed in claim 4, **characterised in that** the outer and the inner element (17, 18) have coaxial cylindrical walls (17w, 18w).

6. Tightening device (7) as claimed in claim 5, **characterised in that** said coaxial cylindrical walls (17w, 18w) of the outer and inner element (17, 18) are slidingly connected together.

7. Tightening device (7) as claimed in claim 6, **characterised in that** the cylindrical wall (18w) of the inner element (18) is provided with a ruler (19), and **in that** the outer element (17) has an indicator indicating the displacement on this ruler (19).

8. Tightening device (7) as claimed in claim 7, **characterised in that** said indicator is defined by an end border of the cylindrical wall (17w) of the outer element (17).

9. Tightening device (7) as claimed in claim 1, **characterised in that** said blocking element (13) is a nut screwed on a threaded terminal portion of the rod (10) .

10. Tightening device (7) as claimed in claim 2, **characterised in that** said wedge (11) has its smallest base opposite the springs (14) and blocking element (13) associated to it.

11. Tightening device (7) as claimed in claim 1, **characterised in that** the rod (10) carries, at an end opposite the one having the arrangement comprising the wedge (11), the at least a spring (14), the blocking element (13) and the spacer (15), a further connecting element (8) with smallest base towards the arrangement.

12. Tightening device (7) as claimed in claim 11, **characterised in that** the further connecting element (11) is a wedge.

13. Tightening device (7) as claimed in claim 12, **characterised in that** said further wedge (8) is fixed to the rod (10).

14. Tightening device (7) as claimed in claim 1, **characterised in that** the outer element (17) and/or the inner element (18) are defined by cup shaped pieces.
